# EUROPEAN PATENT SPECIFICATION

(11) **EP 2 717 608 B1**
(45) Date of publication and mention of the grant of the patent: **26.12.2018**
(21) Application number: 12790374.8
(22) Date of filing: 22.05.2012
(51) Int. Cl.: H04W 72/08, H04W 72/10, H04W 72/12, H04W 88/10, H04L 12/863

(54) **MULTIMODE BASE STATION DATA TRANSMISSION METHOD AND DEVICE**
DATENÜBERTRAGUNGSVERFAHREN UND -VORRICHTUNG FÜR EINE MULTIMODALE BASISSTATION
PROCÉDÉ ET DISPOSITIF DE TRANSMISSION DE DONNÉES DE STATION DE BASE MULTIMODE

(30) Priority: 26.05.2011 CN 201110139362
(43) Date of publication of application: 09.04.2014
(73) Proprietor: ZTE Corporation, Shenzhen, Guangdong 518057 (CN)
(72) Inventor: LI, Rui, Shenzhen Guangdong 518057 (CN); HUANG, Jun, Shenzhen Guangdong 518057 (CN); LIAO, Junfeng, Shenzhen Guangdong 518057 (CN)
(74) Representative: Novagraaf Technologies
(86) International application number: PCT/CN2012/075855
(87) International publication number: WO 2012/159560

(56) References cited:
- EP-A2- 2 144 477
- CN-A- 101 754 237
- CN-A- 101 939 944
- CN-A- 102 026 422
- CN-A- 102 045 829
- Miguel Barreiros ET AL: "Advanced Queuing Topics QOS-Enabled Networks: Tools and Foundations" In: "Advanced Queuing Topics QOS-Enabled Networks: Tools and Foundations", 1 January 2011 (2011-01-01), Wiley, XP055143537, ISBN: 978-0-47-068697-3 pages 148-164, DOI: 10.1002/9780470976814.ch8, * page 148 - page 150 * * figure 8.1 * * figure 8.2 * * figure 8.4 *
- Jonathan Olsson: "Carrier Ethernet Backhaul Services for Mobile Operators", , 6 December 2008 (2008-12-06), pages 1-9, XP055315946, Retrieved from the Internet: URL:http://www.ethernetacademy.net/Etherne t-Academy-Articles/carrier-ethernet-backha ul-services-for-mobile-operators/Print [retrieved on 2016-11-02]
- Anonymous: "Technical Specification MEF 11 User Network Interface (UNI) Requirements and Framework", , 30 November 2004 (2004-11-30), pages 1-33, XP055315980, Retrieved from the Internet: URL:https://www.mef.net/Assets/Technical_S pecifications/PDF/MEF_11.pdf [retrieved on 2016-11-02]

## Description

### Field

The present invention relates to the communication field, and in particular to a method and a device for multi-mode base station data transmission.

### Background

In order to operate the networks more highly efficiently and save the costs, mobile operators usually wish that the existing base stations can be upgraded to future standards merely with very few capitals. However, the continuous increasing of the current access technologies and air interfaces, the mobile operators are faced with serious challenges, that is, not only suitably deploying the current networks but also keeping compatible with the future standard. Especially on some mature markets, the usage period of wireless infrastructures is very short, which is only several yeas usually, and since the marketing and user adaptation always lag behind technology upgrade, the return on investment of the newly deployed equipment cannot be ensured. In spite of this, in order to ensure the further competitiveness, most operators still employ predetermined technology evolvement paths, that is, from global system for mobile communication (GSM in short) to wideband code division multiple access (WCDMA in short), to high speed uplink packet access (HSPA in short), and at last to long term evolution (LTE in short) . With the evolution of the technologies, the existing hardware that cannot be upgraded has to be replaced or equipment has to be superposed; especially in standards such as LTE, after the air interfaces are evolved from code division multiple access (CDMA in short) to LTE, the existing equipment will be all replaced possibly. In order to enable their own base stations to be compatible with future standards, some operators who are expanding the capacities currently turn to base stations that can be upgraded by means of software reconfiguration, and allowing a plurality of air interfaces to access a dual-mode and a multi-mode base station simultaneously is an inevitable trend.

The multi-mode base station shares one hardware platform, and a user can run wireless products with a plurality of formats by configuring different software. The hardware platform of the multi-mode base station usually meets to share base band units (BBU in short), share the power supply and transmission module and support multi-mode radio remote units (RRU in short), that is, one RRU unit can support a plurality of formats in one and the same band, and in terms of software, has to share the main controller and share one and the same operations and maintenance center (OMC in short) background and so on.

The multi-mode base station shares the transmission module. The unification of transmission resources can reduce the complexity of operator networking and background operation and maintenance, and at the same time, save a great amount of costs. However, the requirements of products with different formats (modes) to transmission characteristics are different, for example, the priority of the service, the traffic limit of the bandwidth and so on are different.

The connection methods of the conventional base stations are mainly divided into two kinds of E1 and Ethernet access. E1 is point-to-point connection, and usually, different E1 lines can be used in different products, and therefore different products are distinguished from each other in terms of physical connections. Ethernet belongs to multipoint broadcast access, the connection control of which is more complicated, and due to the burst and broadcast characteristics of packet data, the Ethernet cannot ensure the quality of service of data. The present invention is mainly directed to the Ethernet access method.

Due to the complexity of transmission networking, if the sending traffic of a certain node in one transmission path is too large, it usually will cause significant data overstock, the delay of the data packet too long, or the data packet being discarded, and therefore traffic limit processing is usually performed on the sending end. The traffic limit processing of a single-mode base station is usually very simple, and it is merely required to set a traffic limit for a certain physical network port to limit the external traffic of the entire base station. In addition, there are also different service streams in single-mode products, such as Voice telephone, surfing WEB, data download and so on, the requirements of different service streams to network transmission performance are different; generally, the transmission priority of voice is required to be higher than that of surfing WEB, the priority of data download can be set as the lowest usually, but it is expected to perform largest traffic download when the network resources are idle. Therefore, the service transmission of one and the same product requires to be configured with respect to priority and weight, and it is required to dynamically allocate the bandwidth in a balanced way. The fact that the single-mode base station can ensure the transmission quality is mainly embodied in the following aspects:
traffic limit is to limit the incoming and outgoing traffic of a logic port, a scheduler (which can be a central processing unit (CPU in short), or can be other software/hardware resources) reads the cache and sends data each time, and even if the scheduler has idle time slices, messages the number of which exceeds a threshold value will not be sent out, and therefor traffic limit is non-occupying, and even if other logic ports have idle traffic, as long as the traffic of the present logic port is limited within a certain threshold value, the traffic of other ports cannot be occupied. Simply speaking, traffic limit is to limit how much data the current network port can send maximally, the configuration of traffic limit usually shall not exceed the maximum sending capability of the network port, and the sum of the sending rates of all the cache queues shall not exceed the maximum traffic of the network port.

Weight is to configure different proportions to schedule the queues. The scheduler processes the cache queues according to different weight values within the allocated time slices, and if the weight allocated to each queue is the same, it is equivalent to the case where the time slice allocated to each queue is the same. If a certain queue does not have enough messages for sending, it will be scheduled to the next queue automatically. When the current time slice is run out, next scheduling continues from the previous scheduling. If the traffic of the network port does not reach the maximum value of the network port, it indicates that the scheduler still has idle time slices, and at this moment, weight cannot act to limit, and each logic port can send a message according to a rate which does not exceed its own traffic limit. Only if the maximum traffic of the network port overloads, scheduling will be performed according to weight. Weight configuration is occupying, and if the traffic of the entire network port is still spared and the current traffic of the present logic port exceeds the configured weight, the sending chances of other ports can be occupied. A common weight configuration algorithm can select weighted fair queuing (WFQ in short) or similar algorithms such as WFQ-based improvement type and so on.

Absolute priority requires to start scheduling from the highest priority and successively process the queue of the next priority, which ensures that a high-priority service is sent preferentially under effective resource conditions.

With respect to the multi-mode base station, the single-mode base station merely relates to the transmission quality problem of a single product without managing the scheduling relationship among different mode products, and the guarantee on transmission quality is much simpler. However, different products of multi-mode products are equal, and with the complication of the application scenarios, it may be required to support dual-mode, tri-mode and even four-mode transmission in the future; products of different modes are independent, which requires multi-mode transmission resources to effectively isolate different products and the products to keep transparent to underlying transmission resources (that is, the underlying transmission resources need not know which kind of particular format of product is born), and it is also required to realize bandwidth share maximization when performing effective scheduling among different formats of products, and also support configuration alternation and due update and so on. Current single-mode transmission resource configuration methods cannot meet the multi-mode transmission demand, and therefore it is required to be improved.

Furthermore, D1(EP2144477A2) is a relevant document, which discloses a method for transmitting packets in a mobile communications network, and aims to improve the trunking efficiency. D7 (Jonathan Oisson: "Carrier Ethernet Backhaul Services for Mobile Operators", 6 December 2008 (2008-12-08), pages 1-9, XP055815946) and D8 ("User Network Interface (UNI) Requirements and Framework", November 2004) also provide the related technical solution. However, the above mentioned problem still remains unsolved.

### Summary

The present invention provides a multi-mode base station data transmission solution, so as to at least solve one of the problems in multi-mode co-transmission of how to ensure the transmission quality of different products, different service streams of each product and especially a low-priority service and rationally make use of bandwidth resources to the greatest extent based on this.

The present invention is defined by the independent claims. The dependent claims define particular embodiments of the invention. According to one aspect of the present invention, a multi-mode base station data transmission method is provided, which comprises: a multi-mode base station maps data to be transmitted onto preconfigured bandwidth resources corresponding to a mode of the data to be transmitted, wherein bandwidth of the bandwidth resources is not greater than the traffic limit configured for the mode of the data to be transmitted; the multimode base station uses the bandwidth resources to transmit the data to be transmitted; before the multimode base station maps the data to be transmitted onto the preconfigured bandwidth resources corresponding to the mode of the data to be transmitted, the method further comprises: configuring traffic limit, weight and priority for each mode supported by the multi-mode base station; wherein, configuring the traffic limit, weight and priority for each mode supported by the multi-mode base station comprises: dividing resources that can be allocated by the multi-mode base station into one or more bandwidth groups, wherein each of the bandwidth groups individually shares resources of bandwidth allocated for each of the bandwidth group; dividing the resources of bandwidth in each of the bandwidth groups into a plurality of bandwidth resources, and allocating each of the bandwidth resources to a mode supported by the multi-mode base station respectively; according to the mode corresponding to each of the bandwidth resources, configuring the traffic limit, weight and priority for each of the bandwidth resources in one and the same bandwidth group respectively.

Preferably, before the multi-mode base station uses the bandwidth resources to transmit the data to be transmitted, the method further comprises: the multi-mode base station determines that bandwidth resources required for transmitting the data currently are greater than bandwidth resources that can be used by the multi-mode base station; according to weight and priority of the data to be transmitted, the multi-mode base station adjusts the bandwidth resources used by the data to be transmitted.

Preferably, that the multi-mode base station maps the data to be transmitted onto the preconfigured bandwidth resources corresponding to the mode of the data to be transmitted comprises: the multi-mode base station determines that an Internet Protocol (IP) address or a virtual local area network (VLAN) identifier in the data to be transmitted corresponds to the preconfigured bandwidth resources; the multi-mode base station maps the data to be transmitted onto the bandwidth resources. Preferably, the bandwidth resources in each of the bandwidth groups correspond to the resources that can be provided by one or more physical network ports of the multi-mode base station. Preferably, the number of the bandwidth resources in the plurality of bandwidth resources is determined according to a preset policy.

Preferably, after configuring the traffic limit, weight and priority for each of the bandwidth resources in one and the same bandwidth group respectively, the method further comprises: dividing a message sending queue, in each of the bandwidth resources, for transmitting a service stream into a plurality of bandwidth queues, wherein each of the bandwidth queues is allocated to a service corresponding to a mode supported by the multi-mode base station; according to a service type of the service corresponding to each of the bandwidth queues, configuring the traffic limit, weight and priority for each of the bandwidth queues in one and the same bandwidth resources respectively.

Preferably, dividing the message sending queue for transmitting the service stream in each of the bandwidth resources into the plurality of bandwidth queues comprises: according to a mapping relationship between a differentiated service code point (DSCP) value and a queue number, dividing the message sending queue for transmitting the service stream in each of the bandwidth resources into the plurality of bandwidth queues.

Preferably, the number of bandwidth queues in the plurality of bandwidth queues is determined according to a preset policy.

According to another aspect of the present invention, a multi-mode base station data transmission device is provided, comprising: a mapping module configured to map data to be transmitted onto preconfigured bandwidth resources corresponding to a mode of the data to be transmitted, wherein bandwidth of the bandwidth resources is not greater than a traffic limit configured for the mode of the data to be transmitted; a transmission module configured to use the bandwidth resources to transmit the data to be transmitted;
the mapping module is further configured to:
configure traffic limit, weight and priority for each mode supported by the multi-mode base station before mapping the data to be transmitted onto the preconfigured bandwidth resources corresponding to the mode of the data to be transmitted;
wherein, configuring the traffic limit, weight and priority for each mode supported by the multi-mode base station comprises:
   dividing resources that can be allocated by the multi-mode base station into one or more bandwidth groups, wherein each of the bandwidth groups individually shares resources of bandwidth allocated for each of the bandwidth groups;
   dividing the resources of the bandwidth in each of the bandwidth groups into a plurality of bandwidth resources, and allocating each of the bandwidth resources to a mode supported by the multi-mode base station respectively;
   according to the mode corresponding to each of the bandwidth resources, configuring the traffic limit, weight and priority for each of the bandwidth resources in one and the same bandwidth group respectively.
By means of the present invention, the method whereby the bandwidth of the bandwidth resources for a base station to transmit data is not greater than the traffic limit corresponding to the mode of the data is employed such that a low-priority mode can also obtain certain resources, which solves the problem that the transmission quality of different products, different service streams of each product and especially a low-priority service may not meet the transmission requirements.

### Brief Description of the Drawings

Drawings, provided for further understanding of the present invention and forming a part of the specification, are used to explain the present invention together with embodiments of the present invention rather than to limit the present invention, wherein:
Fig. 1 is a flowchart of a multi-mode base station data transmission method according to an embodiment of the present invention;
Fig. 2 is a schematic diagram of three-stage scheduling of transmission resources according to an embodiment of the present invention;
Fig. 3 is a schematic diagram of the configuration order of transmission resources according to an embodiment of the present invention;
Fig. 4 is a schematic diagram of the hardware configuration implementation of transmission resources according to an embodiment of the present invention; and
Fig. 5 is a structural block diagram of a multi-mode base station data transmission device according to an embodiment of the present invention.

### Detailed Description of the Embodiments

The preferred embodiments are described in conjunction with the drawings as follows. It shall be understood that the embodiments of the present application and the features of the embodiments can be combined with each other if there is no conflict.

### Embodiment 1

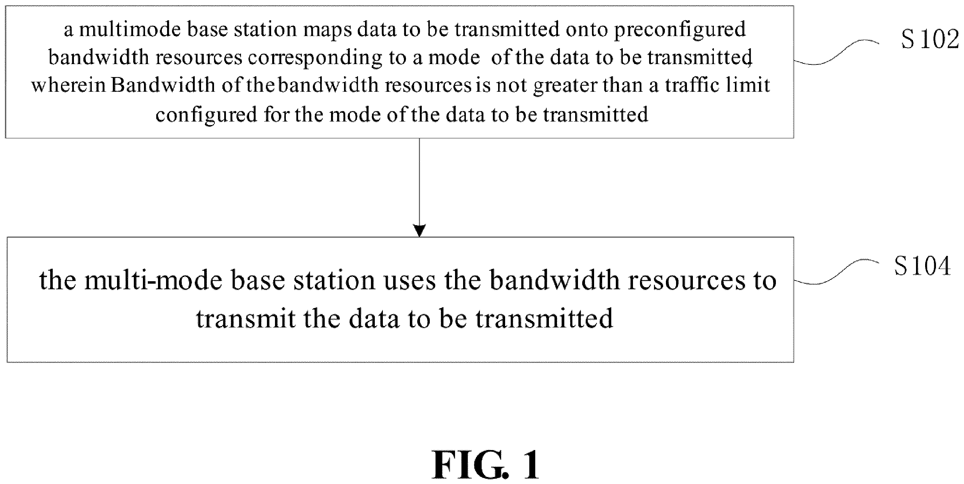

An embodiment of the present invention provides a multi-mode base station data transmission method, which method can be used in the Ethernet access method of a multi-mode base station. Fig. 1 is a flowchart of a multi-mode base station data transmission method according to the embodiment of the present invention, and as shown in Fig. 1, the method comprises:
step S102, a multimode base station maps data to be transmitted onto preconfigured bandwidth resources corresponding to a mode (such as CDMA mode or LTE mode) of the data to be transmitted, wherein bandwidth of the bandwidth resources is not greater than a traffic limit configured for the mode of the data to be transmitted;
step S104, the multi-mode base station uses the bandwidth resources to transmit the data to be transmitted.

In this embodiment, the traffic limit of each mode is preset, and the bandwidth of the bandwidth resources corresponding to each mode is not greater than the traffic limit, so that different modes of products and especially low-priority modes can also obtain certain resources, thereby ensuring the effect whereby the resources obtained by various modes can substantially meet the transmission requirements.

Preferably, before step S104, the following operations can also be performed: the multi-mode base station determines that bandwidth resources required for transmitting data currently are greater than bandwidth resources that can be used by the multi-mode base station; then according to weight and priority of the data to be transmitted, the multi-mode base station adjusts the bandwidth resources used by the data to be transmitted. By means of this embodiment, more bandwidth resources can be allocated to high-priority modes according to the actual situations, thereby being able to better meet the actual requirements.

Step S102 can have a plurality of implementations, and only one of the implementations will be described hereinafter. The multi-mode base station determines that the IP address or the VLAN identifier in the data to be transmitted corresponds to the preconfigured bandwidth resources; the multi-mode base station maps the data to be transmitted onto the bandwidth resources. It should be noted that although this embodiment uses the fact that the IP address or VLAN identifier corresponds to the preconfigured bandwidth resources, however, those skilled in the art could conceive of the fact that other information except the IP address or VLAN identifier can correspond to the preconfigured bandwidth resources, and therefore the equivalent and replacement manners of IP address or VLAN identifier shall also be included in the scope of protection of the present invention.

In a preferred implementation of the embodiment of the present invention, before step S102, traffic limit, weight and priority can be configured for each mode supported by the multi-mode base station.

There can be a plurality of implementations for configuring the traffic limit, the weight and the priority for each mode supported by the multi-mode base station, and merely one of the implementations will be described hereinafter. The resources that can be allocated by the multi-mode base station are divided into one or more bandwidth groups, wherein each of the bandwidth groups individually shares the resources of the bandwidth allocated thereto and corresponds to one logic network port; then, the resources of the bandwidth in each of the bandwidth groups are divided into a plurality of bandwidth resources, and each of the bandwidth resources is allocated to a mode supported by the multi-mode base station respectively, so that the bandwidth resources corresponds to the mode supported by the base station; and at last, according to the mode corresponding to each of the bandwidth resources, the traffic limit, the weight and the priority are configured for each of the bandwidth resources under one and the same bandwidth group respectively. By means of this embodiment, making a bandwidth resource correspond to a mode can conveniently configure the traffic limit, weight and priority for each mode.

The bandwidth resources in each of the bandwidth groups correspond to the resources that can be provided by one or more physical network ports of the multi-mode base station. By means of this embodiment, making a physical network port resource correspond to a bandwidth resource virtualizes the physical port, in which manner, bandwidth resources can be allocated to each product conveniently.

The number of the bandwidth resources in one bandwidth group can be determined according to a preset policy, and preferably, this number can be 8. This embodiment has the advantage of being easy to implement.

In a preferred implementation of the embodiment of the present invention, after configuring the traffic limit, the weight and the priority for each of the bandwidth resources in one and the same bandwidth group respectively, the method further comprises: a message sending queue, in each of the bandwidth resources, for transmitting a service stream is divided into a plurality of bandwidth queues, wherein each of the bandwidth queues is allocated to a service corresponding to a mode supported by the multi-mode base station; according to the service type of the service (such as Voice service, data service, WEB traffic and so on) corresponding to each of the bandwidth queues, configuring the traffic limit, weight and priority for each of the bandwidth queues in the same bandwidth resources respectively. In this embodiment, traffic limit, weight and priority configuration is performed on a plurality of services of one mode, thereby being able to allocate the transmission resources of different services under one and the same mode.

Preferably, according to a mapping relationship between a differentiated service code point (DSCP) value and a queue number, the message sending queue for transmitting the service stream in each of the bandwidth resources is divided into the plurality of bandwidth queues.

The number of bandwidth queues in the bandwidth resources is determined according to a preset policy. Preferably, this number is 8. This embodiment has the advantage of being easy to operate.

### Embodiment 2

In this embodiment, traffic limit is used to isolate various products (that is, services under each mode), and bandwidth resources are shared with weight and priority. The maximum traffic of a certain product can be limited within a certain threshold value by means of traffic limit, thereby avoiding occupying the resources of the other products, as such, some transmission resources can be reserved for other low-priority services. By means of weight configuration, the time slice resources of the scheduler can be made the best, that is, on the premise of not exceeding the total scheduling resources, a service with more traffic can occupy the sending chance of a service with less traffic, thus realizing bandwidth share. If it exceeds the total scheduling resources, the bandwidth will be shared according to the preconfigured proportion, which ensures that each kind of service shares the transmission resources according to the configured weight and priority. For further defining the above-mentioned method, this embodiment introduces three logic concepts to ensure the transmission quality of each service under multi-mode, and these three concepts will be described in particular hereinafter.

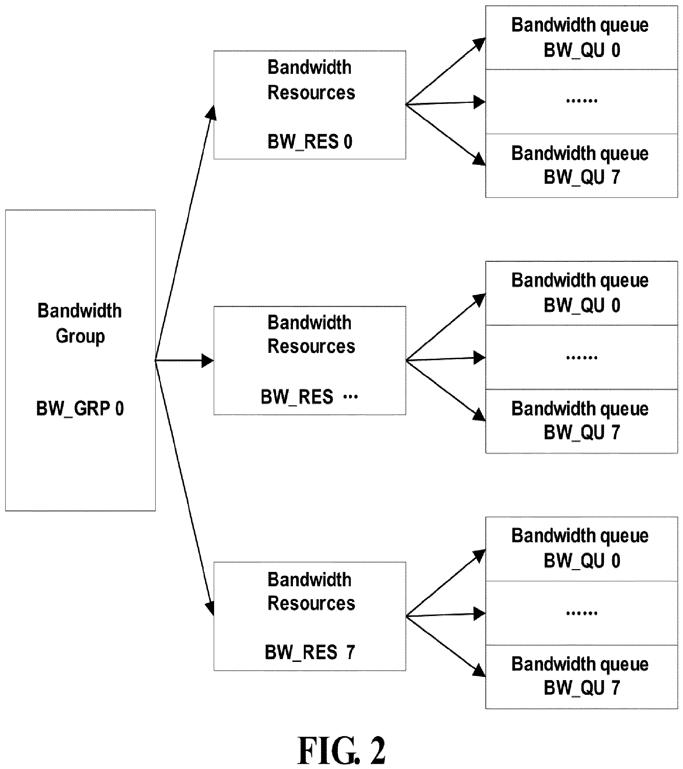

This embodiment proposes a method for three-layer transmission resource scheduling, in which the bandwidth group, bandwidth resources and bandwidth queue can be configured according to the particular environment requirements, so as to distinguish and isolate different products during co-transmission and ensure the quality of service of different services. Fig. 2 is a schematic diagram of three-stage scheduling of transmission resources according to an embodiments of the present invention, and as shown in Fig. 2, in this embodiment, the entire transmission resources are divided into a three-stage scheduling mode, i.e., bandwidth group (BW_GRP in short), bandwidth resources (BW_RES in short) and bandwidth queue (BW_QU in short).

Bandwidth group (BW_GRP) is logically corresponding to a certain group of resources of bandwidth, the bandwidth is occupied individually among groups, and the resources of bandwidth are shared within a group. Physically, BW_GRP can correspond to a set of network ports or correspond to a logic network port which can perform independent transceiving and divided from a single physical network port. The information among different BW_GRPs is isolated from each other completely, and the BW_GRP is determined usually according to the particular requirements.

Bandwidth resources (BW_RES) are corresponding to a particular logic bandwidth resource under a certain particular BW_GRP, which resource usually corresponds to a transmission path between a sending end and a receiving end. The attributes of the BW_RESs under the same BW-GRP can configure traffic limit, weight and priority simultaneously. For a wireless base station, usually it is recommended to configure 8 BW_RESs under 1 BW_GRP. It shall be noted that the number of BW_RESs configured under 1 BW_GRP can change according to the actual situation, which change is within the scope of capability of those skilled in the art and shall also belong the scope of protection of the present application.

Bandwidth queue (BW_QU) is corresponding to a messages sending queue of a service stream of a certain BW_RES, the attributes of the BW_QUs under the same BW_RES can be configured as traffic limit, weight and priority. The enqueuing of different messages can depend on a mapping relationship between a differentiated service code point (DSCP in short) configured in the background and a queue number. The sending among queues depends on sending attributes such as the configured traffic limit, weight and so on. Usually, it is recommended that the number of bandwidth queues under each BW_RES is 8. It shall be noted that the number of bandwidth queues configured under 1 BW_RES can change according to the actual situation, which change is within the scope of capability of those skilled in the art and shall also belong the scope of protection of the present application.

The scheduled resource attribute and configuration methods of the same type are all the same, merely with different configuration data. Some configured weight values ore traffic limit values can be configured flexibly depending on the actual application scenarios of the operators . If a user needs to adapt some data (such as weight proportion relationship or traffic limit value), it is merely required to adapt the corresponding data in the background and synchronize the data to the foreground.

In this embodiment, a particular physical port is virtualized as bandwidth resources by making the BW_GRP correspond to the physical port. Virtualizing the particular physical port as the bandwidth resources has the following benefits: the user need not care the particular physical facilities but pay more attention to whether the bandwidth resources that can be allocated to each product and service streams of this product can be ensured. Therefore, even if the hardware resources are upgraded, the user merely needs to change some configurations simply to shield the change of the underlying hardware, while for some special application enviroments, flexible configuration can be kept to meet the application requirements. At the same time, different services can be isolated from each other by means of traffic limit, which ensures the basic requirements of low-priority services. By means of weight configuration, if the services of different products still have network port traffic balance, the traffic of the remaining services can also be occupied, achieving the purpose of sharing network resources. Anyway, in this embodiment, when a multi-mode base station shares transmission, different products are distinguished and isolated from each other, and the quality of service of different services of a product can be met to the greatest extent.

### Embodiment 3

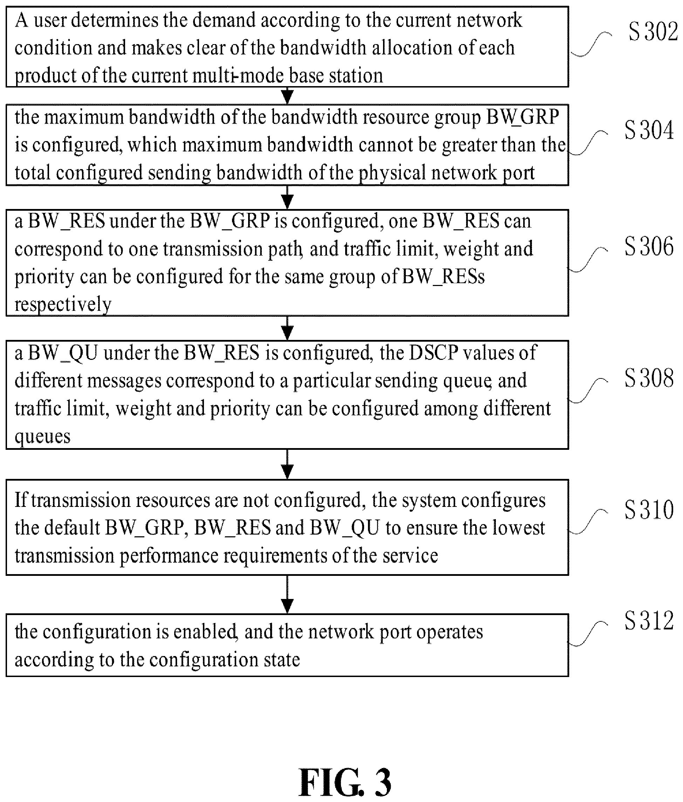

This embodiment is a further optimization to embodiment 1, and Fig. 3 is a schematic diagram of the configuration order of transmission resources according to an embodiment of the present invention, as shown in Fig. 3, this flow comprises:
step S302, a user makes the usage situation of the current network clear and learns the network topology and transmission path and so on comprehensively, and makes the bandwidth allocation of various products and product service streams of a multi-mode base station clear in combination with the actual demand.
Step S304, a bandwidth group BW_GRP is configured, which BW_GRP individually shares the configured bandwidth resources and the maximum sending capability of which is not greater than the maximum sending capability of all the physical network ports of the base station.
Step S306, BW_RESs under the BW_GRP are configured. One BW_RES can correspond to one data transmission path, such as virtual local area network (VLAN in short), Internet Protocol (IP in short) and so on. The BW_RES under the same BW_GRP can be configured traffic limit, weight and priority according to the requirement. The traffic limit value of the BW_RES under the BW_GRP is not greater than the maximum sending traffic of the BW_GRP. One BW_RES can correspond to one mode. How to configure each mode will be described with two examples hereinafter.

For example, in the case of CDMA/LTE service co-mode transmission, the total transmission bandwidth is 100 M, the traffic limit configured for CDMA can be 20 M, and at this moment, regardless of the weight configured for the CDMA service, CDMA can only send 20 M traffic at most, and the remaining 80 M traffic can be allocated to be used by the LTE service.

For example, in the case of CDMA/LTE service co-mode transmission, the total transmission bandwidth is 100 M, the traffic limit configured for CDMA is 20 M, the traffic limit configured for LTE is 90 M, and the weight configuration proportion is 1 : 9; assuming that the LTE service is 30 M initially, the CDMA service is 15 M, and since the sum of the traffic of both does not reach the total transmission bandwidth 100 M, the weight cannot act. When CDMA increases to 20 M or higher continuously, the traffic limit will act to loss packets, the CDMA service can be 20 M highest, the subsequent LTE service increases to 80 M continuously, which just reaches full traffic, then the weight configuration starts to act; at this moment, since the weight configuration of both is 1 : 9, the bandwidth that LTE shall acquire exceeds 80 M, then the LTE service starts to suppress the CDMA service until the CDMA service is 10 M, at this moment, the LTE service is 90 M.

Step S308, a BW_QU under the BW_RES is configured, and a correlation between the DSCP value and the sending queue number is configured. One sending queue can correspond to a plurality of DSCP values, but one and the same DSCP value can only correspond to one queue. Then, traffic limit, weight and priority are configured for each queue.

Step S310, if transmission resources are not configured, then the system configures the default BW_GRP, BW_RES, and BW_QU to ensure the lowest transmission performance requirements.

Step S312, enable the configuration, the network port operates according to the above description, and the quality of service of the service scheduling of each product is met on demand under the multi-mode co-transmission mode.

### Embodiment 4

This embodiment makes further improvements on embodiment 1, and this embodiment will be described in particular hereinafter.

A certain multi-mode base station supports CDMA/LTE co-mode transmission, and the core network and the network management devices to which CDMA and LTE are connected are located in different rooms. Assuming that the multi-mode base station can support 4 BW_GRPs at most, each BW_GRP supports 8 BW_RESs, and each BW_RES supports 8 BW_QUs. There can be the following configuration:
1. The user makes the network usage environment clear and determines that the maximum bandwidth of the router connected with the base station is 200 M, then the user configures 1 BW_GRP, the bandwidth of which is 200 M, and the following CDMA/LTE service will share these 200 M independent resources.
2. The core networks of the CDMA and LTE services are located in different rooms, that is, the CDMA service stream and the LTE service stream have different transmission paths, and the user configures the CDMA service in BW_RES0 and configures the LTE service in BW_RES 1.
3. The user judges according to statistics and demand that there are more voice users of the CDMA service than the data users of LTE, so the bandwidth has to be reserved for the CDMA voice service preferentially. However, the LTE data service is very large and increases explosively, so the traffic of the LTE service must be limited. As such, the user can configure the traffic limit of the CDMA service to be 100 M, the weight 30%, and the traffic limit of the LTE service 120 M, and the weight 70%.
4. Since the priority of the CDMA voice service has to be ensured first, the DSCP of the CDMA voice service is configured to correspond to BW_QU 0 of BW_RES 0, the priority thereof is configured to be the highest, and weights are configured for the remaining queues as required. The priority of the LTE data traffic is the lowest, then the DSCP of the LTE data service stream is configured to correspond to BW_QU 7 of BW_RES1, and a lower weight 10% is configured.
5. After the base station starts to operate, if the CDMA service traffic is relatively large and the LTE service is relatively small, then the CDMA service will increase to 100 M continuously, so as to prevent the intermediate equipment from overloading, and the remaining messages will be discarded. Then, the LTE service traffic starts to increase, and when the sum of the CDMA and LTE service traffic starts to exceed the planned bandwidth 200 M of BW_GRP (before this, a single CDMA service can send 100 M traffic at most, and a single LTE service can send 120 M data traffic; however, the sum of both cannot exceed 200 M), after being overloaded, the weight starts to act to schedule, and the LTE service traffic starts to suppress the traffic of CDMA until the LTE service traffic reaches the maximum traffic limit 120 M, and the CDMA is suppressed to 80 M. The bandwidth control requirements configured by the user initially are met.

By means of the configuration of this embodiment, it can be sufficiently ensured that different products are isolated from each other, the high-priority service is limited, and the basic sending chance of the low-priority service is ensured; and when the network port traffic still has balance, a high-traffic service stream can occupy the low-traffic service stream, so that the bandwidth resources can be shared. If the total bandwidth has been overloaded, then the sending rates of different services are controlled according to preset weights, thus ensuring the priorities among different service streams and meets the effective scheduling of resources by base station co-transmission to the greatest extent.

### Embodiment 5

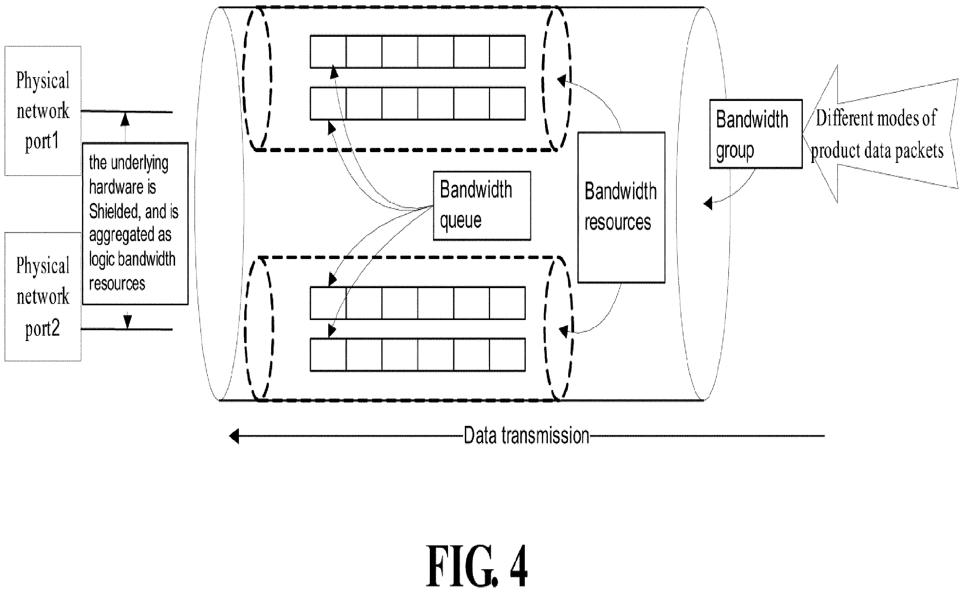

This embodiment proposes a hardware implementation model, which can met the above-mentioned multi-mode co-transmission requirements. Fig. 4 is a schematic diagram of the hardware implementation of transmission resources according to an embodiment of the present invention, and as shown in Fig. 4, this implementation model includes three layers: the first model layer can shield an upper-layer product from the underlying hardware, provide unified bandwidth resources, and realize isolation among different resources and management of total bandwidth resources; the second model layer can realize the total requirements of different products or transmission paths (usually, different products uses different transmission paths) to the transmission quality of a single product, and can share bandwidth resources among different products to realize the most utilize of the band resources; and the third model layer distinguishes different service streams such as voice, data, etc. in a single product and transmits same on the premise of ensuring the transmission resources of a single product.

If the hardware resources meet the requirements, a plurality of bandwidth groups can be divided, the bandwidths of which are isolated from each other, that is, one bandwidth group is equivalent to one logic network port, and all the services are transmitted in this logic network port. According to different configurations, products with different modes can be mapped onto different paths, i.e., mapped onto different transmission resources in Fig. 4, resource allocation, limitation, occupation and sharing can be realized among various transmission resources, in each bandwidth resource, different service streams (such as voice, surfing WEB, download and so on) are allocated to different priorities of queues according to the products, and bandwidth allocation, limitation, occupation and sharing can be realized among the queues, and at last, data packets can be sent out via the underlying physical network port.

The resource scheduling of data will be described in detail hereinafter.
1. If the multi-mode base station runs a plurality of modes of products and the plurality of modes of products are grouped into one and the same bandwidth group (usually, one base station only allocates one bandwidth resource group), and different modes of products select one bandwidth group to send data.
2. The core networks or network management centers corresponding to different modes of products usually are not located in one and the same room, that is, the transmission paths of different modes of products are different, which transmission paths can be different destination Internet Protocol (IP in short) addresses or different virtual local area network identifiers (VLAN in short), and the particular configuration needs to be judged according to the actual networking, and according to these identifiers, the bandwidth group maps different transmission paths (usually, one mode of products corresponds to one transmission path) onto different bandwidth resources.
3. Under the same bandwidth resource, according some identification bits of the IP packet, usually the transmission paths are mapped into different queues using the differentiated service code points (DSCP in short) in the IP message head as identifiers, which can be configured according to the actual situations here, for example, if the voice priority is higher, then it will be placed into the queue with the highest priority and a bandwidth of a certain weight will be reserved, and the traffic of data download is large, the priority thereof is low, and in order not to affect other services, traffic limit can be configured therefor; and in order to enlarge traffic download when the network is idle, more queues can be allocated; however, when the entire bandwidth resource is traffic-full, the bandwidths of other services cannot be occupied, and merely a lower weight can be allocated. All these can be processed according to the demand of the user. Finally, the message is sent out from the underlying hardware network port through different queues.
4. The user collects such demands in advance, configures relevant data and entries and synchronizes them into the hardware resources, and after the synchronization takes effect, the multi-mode service of the entire base station can send data in a preset manner, and guarantee the transmission quality of various modes of products and the service streams of various products on demand to the greatest extent. If the user demand changes, then this can be done by adapting relevant entries and data and then synchronizing same into the hardware resources.

### Embodiment 6

This embodiment provides a multi-mode base station data transmission device, which device is configured to implement the above-mentioned method and can be used in a multi-mode base station.

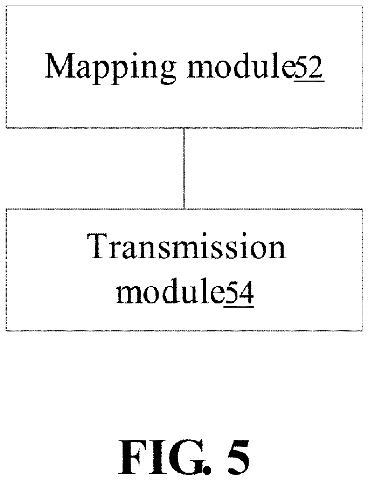

Fig. 5 is a structural block diagram of a multi-mode base station data transmission device according to an embodiment of the present invention, and as shown in Fig. 5, this device comprises: a mapping module 52 configured to map data to be transmitted onto preconfigured bandwidth resources corresponding to a mode of the data to be transmitted, wherein bandwidth of the bandwidth resources is not greater than a traffic limit configured for the mode of the data to be transmitted; a transmission module 54 coupled to the mapping module 52 and configured to use the bandwidth resources to transmit the data to be transmitted.

Preferably, the device further comprises: a determination module configured to determine that bandwidth resources required to transmit data currently are greater than bandwidth resources that can be used by the multi-mode base station; and an adjustment module coupled to the determination module and configured to adjust the bandwidth resources used by the data to be transmitted according to weight and priority of the mode of the data to be transmitted.

Preferably, the mapping module 52 comprises: a determination sub-module configured to determine that an IP address or VLAN identifier in the data to be transmitted corresponds to the preconfigured bandwidth resources; and a mapping sub-module configured to map the data to be transmitted to these bandwidth resources.

The device further comprises: a configuration module configured to configure traffic limit, weight and priority for each mode supported by the base station.

In this embodiment, the traffic limit, weight and priority are configured for each mode supported by the base station and resources are allocated according to this traffic limit, weight and priority, so that a low-priority mode can also obtain certain resources, thus ensuring the effect whereby the resources obtained by the low-priority mode can substantively meet the transmission requirements.

In this embodiment, the configuration module can realize the functions thereof via a plurality of structures, and a preferred manner thereof will be described hereinafter. The configuration module can comprises: a division sub-module configured to divide resources that can be allocated by the multi-mode base station into one or more bandwidth groups, wherein each of the bandwidth group individually shares the bandwidth resources allocated thereto; an allocation sub-module, coupled to the division sub-module, configured to divide the resources of bandwidth in each of the bandwidth group into a plurality of bandwidth resources, and allocate each of the bandwidth resources to a mode supported by the multi-mode base station respectively, so that the bandwidth resources correspond to the mode supported by the base station; and a configuration sub-module, coupled to the allocation sub-module. According to the mode corresponding to each of the bandwidth resources, the configuration sub-module is configured to configure traffic limit, weight and priority for each of the bandwidth resources under one and the same bandwidth group respectively. By means of this embodiment, making a bandwidth resource correspond to a mode can conveniently configure traffic limit, weight and priority for each mode.

The resources of bandwidth in each of the bandwidth groups correspond to the resources that can be provided by one or more physical network ports of the multi-mode base station. By means of this embodiment, making one or more physical network ports correspond to the bandwidth resources virtualizes the physical port, in which manner, bandwidth resources can be allocated to each product conveniently.

The number of bandwidth resources in one bandwidth group can be determined according to a preset policy, and preferably, this number can be 8. This embodiment has the advantage of being easy to implement.

In a preferred implementation of an embodiments of the present invention, the device further comprises: a division module configured to, after configuring the traffic limit, weight and priority for each of the bandwidth resources in one and the same bandwidth group respectively, divide a message sending queue for transmitting a service stream in each of the bandwidth resources into a plurality of bandwidth queues, wherein each of the bandwidth queues is allocated to a service corresponding to a mode supported by the multi-mode base station; a setting module coupled to the division module and configured to configure the traffic limit, weight and priority for each of the bandwidth queues in the same bandwidth resources respectively according to the service type of the service (such as Voice over Internet, data service, WEB traffic and so on) corresponding to each of the bandwidth queues. In this embodiment, the traffic limit, weight and priority configuration is performed on a plurality of services of one mode, thereby being able to allocate the transmission resources of different services under one and the same mode.

Preferably, the division module can be configured to, according to the mapping relationship between a differentiated service code point (DSCP) value and a queue number, divide a message sending queue for transmitting a service stream in each of the bandwidth resources to a plurality of bandwidth queues.

The number of the bandwidth queues in the bandwidth resources is determined according to a preset policy. Preferably, this number is 8. This embodiment has the advantage of being easy to operate.

In summary, in the present invention, the traffic limit, weight and priority are configured for each mode supported by the base station and resources are allocated according to this traffic limit, weight and priority, so that a low-priority mode can also obtain certain resources, thus ensuring the effect whereby the resources obtained by the low-priority mode can substantively meet the transmission requirements.

Obviously, those skilled in the art should know that each of the mentioned modules or steps of the disclosure can be realized by universal computing devices; the modules or steps can be focused on single computing device, or distributed on the network formed by multiple computing devices; selectively, they can be realized by the program codes which can be executed by the computing device; thereby, the modules or steps can be stored in the storage device and executed by the computing device; and under some circumstances, the shown or described steps can be executed in different orders, or can be independently manufactured as each integrated circuit module, or multiple modules or steps thereof can be manufactured to be single integrated circuit module, thus to be realized. In this way, the disclosure is not restricted to any particular hardware and software combination.

The descriptions above are only the preferable embodiment of the disclosure, which are not used to restrict the disclosure, for those skilled in the art, the disclosure may have various changes and variations.

## Claims

1. A method for multi-mode base station data transmission between network side and the multi-mode base station, comprising the steps of:
a multi-mode base station mapping data to be transmitted onto preconfigured bandwidth resources corresponding to a mode of the data to be transmitted, wherein bandwidth of the bandwidth resources is not greater than a traffic limit configured for the mode of the data to be transmitted **(S102);**
the multi-mode base station using the bandwidth resources to transmit the data to be transmitted **(S104);**
before the multimode base station mapping the data to be transmitted onto the preconfigured bandwidth resources corresponding to the mode of the data to be transmitted, the method further comprises:
configuring traffic limit, weight and priority for each mode supported by the multi-mode base station;
wherein, configuring the traffic limit, weight and priority for each mode supported by the multi-mode base station is **characterized by**:
dividing resources that can be allocated by the multi-mode base station into one or more bandwidth groups, wherein each of the bandwidth groups individually shares resources of bandwidth allocated for each of the bandwidth groups;
dividing the resources of the bandwidth in each of the bandwidth groups into a plurality of bandwidth resources, and allocating each of the bandwidth resources to a mode supported by the multi-mode base station respectively;
according to the mode corresponding to each of the bandwidth resources, configuring the traffic limit, weight and priority for each of the bandwidth resources in one and the same bandwidth group respectively.

2. The method according to claim 1, **characterized in that** before the multi-mode base station using the bandwidth resources to transmit the data to be transmitted, the method further comprises:
the multi-mode base station determines that bandwidth resources required for transmitting the data currently are greater than bandwidth resources that can be used by the multi-mode base station;
according to weight and priority of the data to be transmitted, the multi-mode base station adjusts the bandwidth resources used by the data to be transmitted.

3. The method according to claim 1, **characterized in that** the multi-mode base station mapping the data to be transmitted onto the preconfigured bandwidth resources corresponding to the mode of the data to be transmitted comprises:
the multi-mode base station determines that an Internet Protocol, IP, address or a virtual local area network, VLAN, identifier in the data to be transmitted corresponds to the preconfigured bandwidth resources;
the multi-mode base station maps the data to be transmitted onto the bandwidth resources.

4. The method according to claim 1, **characterized in that** the bandwidth resources in each of the bandwidth groups correspond to the resources that can be provided by one or more physical network ports of the multi-mode base station.

5. The method according to claim 1, **characterized in that** the number of the bandwidth resources in the plurality of bandwidth resources is determined according to a preset policy.

6. The method according to any one of claims 1 to 5, **characterized in that** after configuring the traffic limit, weight and priority for each of the bandwidth resources in one and the same bandwidth group respectively, the method further comprises:
dividing a message sending queue, in each of the bandwidth resources, for transmitting a service stream into a plurality of bandwidth queues, wherein each of the bandwidth queues is allocated to a service corresponding to a mode supported by the multi-mode base station;
according to a service type of the service corresponding to each of the bandwidth queues, configuring the traffic limit, weight and priority for each of the bandwidth queues in one and the same bandwidth resources respectively.

7. The method according to claim 6, **characterized in that** dividing the message sending queue for transmitting the service stream in each of the bandwidth resources into the plurality of bandwidth queues comprises:
according to a mapping relationship between a differentiated service code point, DSCP, value and a queue number, dividing the message sending queue for transmitting the service stream in each of the bandwidth resources into the plurality of bandwidth queues.

8. The method according to claim 6, **characterized in that** the number of bandwidth queues in the plurality of bandwidth queues is determined according to a preset policy.

9. A device for multi-mode base station data transmission, comprising:
a mapping module configured to map data to be transmitted onto preconfigured bandwidth resources corresponding to a mode of the data to be transmitted, wherein bandwidth of the bandwidth resources is not greater than a traffic limit configured for the mode of the data to be transmitted;
a transmission module configured to use the bandwidth resources to transmit the data to be transmitted;
the mapping module is further configured to:
configure traffic limit, weight and priority for each mode supported by the multi-mode base station before mapping the data to be transmitted onto the preconfigured bandwidth resources corresponding to the mode of the data to be transmitted;
wherein configuring the traffic limit, weight and priority for each mode supported by the multi-mode base station is **characterized by** :
dividing resources that can be allocated by the multi-mode base station into one or more bandwidth groups, wherein each of the bandwidth groups individually shares resources of bandwidth allocated for each of the bandwidth groups;
dividing the resources of the bandwidth in each of the bandwidth groups into a plurality of bandwidth resources, and allocating each of the bandwidth resources to a mode supported by the multi-mode base station respectively;
according to the mode corresponding to each of the bandwidth resources, configuring the traffic limit, weight and priority for each of the bandwidth resources in one and the same bandwidth group respectively.

## Patentansprüche

1. Verfahren für eine Datenübertragung einer multimodalen Basisstation zwischen Netzwerkseite und der multimodalen Basisstation, die folgenden Schritte umfassend:
Abbilden, durch eine multimodale Basisstation, von Daten, die zu übertragen sind, auf vorkonfigurierte Bandbreitenressourcen, die einem Modus der Daten entsprechen, die zu übertragen sind, wobei die Bandbreite der Bandbreitenressourcen nicht größer ist, als eine Datenverkehrsgrenze, die für den Modus der Daten konfiguriert ist, die zu übertragen sind (S102);
Nutzen, durch die multimodale Basisstation, der Bandbreitenressourcen, um die Daten zu übertragen, die zu übertragen sind (S104);
wobei das Verfahren, bevor die multimodale Basisstation die Daten, die zu übertragen sind, auf vorkonfigurierte Bandbreitenressourcen abbildet, die dem Modus der Daten entsprechen, die zu übertragen sind, weiter umfasst:
Konfigurieren von Datenverkehrsgrenze, Gewicht und Priorität für jeden Modus, der durch die multimodale Basisstation unterstützt wird;
wobei das Konfigurieren von Datenverkehrsgrenze, Gewicht und Priorität für jeden Modus, der durch die multimodale Basisstation unterstützt wird, **gekennzeichnet ist durch**:
Unterteilen von Ressourcen, die **durch** die multimodale Basisstation zugeordnet werden können, in eine oder mehrere Bandbreitengruppen, wobei jede der Bandbreitengruppen einzeln Ressourcen von Bandbreiten teilt, die jeder der Bandbreitengruppen zugeordnet ist;
Unterteilen der Ressourcen der Bandbreite in jeder der Bandbreitengruppen in eine Vielzahl von Bandbreitenressourcen, und Zuordnen jeder der Bandbreitenressourcen zu einem Modus, der jeweils **durch** die multimodale Basisstation unterstützt wird;
gemäß dem Modus, der jeder der Bandbreitenressourcen entspricht, Konfigurieren der Datenverkehrsgrenze, von Gewicht und Priorität für jede der Bandbreitenressourcen jeweils in ein und derselben Bandbreitengruppe.

2. Verfahren nach Anspruch 1, **dadurch gekennzeichnet, dass** das Verfahren, bevor die multimodale Basisstation die Bandbreitenressourcen zum Übertragen der Daten nutzt, die zu übertragen sind, weiter Folgendes umfasst:
die multimodale Basisstation bestimmt, dass die Bandbreitenressourcen, die zum Übertragen der Daten benötigt werden, aktuell größer sind, als die Bandbreitenressourcen, die durch die multimodale Basisstation verwendet werden können;
gemäß Gewicht und Priorität der Daten, die zu übertragen sind, passt die multimodale Basisstation die Bandbreitenressourcen an, die durch die Daten, die zu übertragen sind, genutzt werden.

3. Verfahren nach Anspruch 1, **dadurch gekennzeichnet, dass** die multimodale Basisstation, die die Daten, die zu übertragen sind, auf die vorkonfigurierten Bandbreitenressourcen abbildet, die dem Modus der Daten entsprechen, die zu übertragen sind, umfasst:
die multimodale Basisstation bestimmt, dass eine Internetprotokoll-, IP-Adresse oder ein virtual local area network-, VLAN-Identifizierer in den Daten, die zu übertragen sind, den vordefinierten Bandbreitenressourcen entspricht;
die multimodale Basisstation bildet die Daten, die zu übertragensind, auf die Bandbreitenressourcen ab.

4. Verfahren nach Anspruch 1, **dadurch gekennzeichnet, dass** die Bandbreitenressourcen in jeder der Banbreitengruppen den Ressourcen entsprechen, die durch einen oder mehrere physische Netzwerkanschlüsse der multimodalen Basisstation bereitgestellt werden können.

5. Verfahren nach Anspruch 1, **dadurch gekennzeichnet, dass** die Anzahl der Bandbreitenressourcen in der Vielzahl von Bandbreitenressourcen gemäß einer vordefinierten Richtlinie bestimmt wird.

6. Verfahren nach einem der Ansprüche 1 bis 5, **dadurch gekennzeichnet, dass** das Verfahren nach dem Konfigurieren der Datenverkehrsgrenze, von Gewicht und Priorität für jede der Bandbreitenressourcen jeweils in ein und derselben Bandbreitengruppe weiter umfasst:
Unterteilen einer Nachrichten-Sendewarteschlange in jeder der Bandbreitenressourcen zum Übertragen eines Dienststroms in eine Vielzahl von Bandbreiten-Warteschlangen, wobei jede der Bandbreiten-Warteschlangen einem Dienst zugeordnet ist, der einem Modus entspricht, der durch die multimodale Basisstation unterstützt wird;
gemäß einem Diensttyp des Dienstes, der jeder der Bandbreiten-Warteschlangen entspricht, Konfigurieren der Datenverkehrsgrenze, von Gewicht und Priorität für jede der Bandbreiten-Warteschlangen jeweils in ein und denselben Bandbreitenressourcen.

7. Verfahren nach Anspruch 6, **dadurch gekennzeichnet, dass** das Unterteilen der Nachrichten-Sendewarteschlange zum Übertragen des Dienststroms in jeder der Bandbreitenressourcen in die Vielzahl von Bandbreiten-Warteschlangen umfasst:
gemäß einer Abbildungs-Beziehung zwischen einem differentiated service Code-, DSCP-Wert und einer Warteschlangenanzahl, Unterteilen der Nachrichten-Sendewarteschlange zum Übertragen des Dienststroms in jeder der Bandbreitenressourcen in die Vielzahl von Bandbreiten-Warteschlangen.

8. Verfahren nach Anspruch 6, **dadurch gekennzeichnet, dass** die Anzahl von Bandbreiten-Warteschlangen in der Vielzahl von Bandbreiten-Warteschlangen gemäß einer vordefinierten Richtlinie bestimmt wird.

9. Vorrichtung für eine Datenübertragung einer multimodalen Basisstation, umfassend:
ein Abbildungsmodul, das konfiguriert ist, um Daten, die zu übertragen sind, auf vorkonfigurierte Bandbreitenressourcen abzubilden, die einem Modus der Daten entsprechen, die zu übertragen sind, wobei die Bandbreite der Bandbreitenressourcen nicht größer ist, als eine Datenverkehrsgrenze, die für den Modus der Daten, die zu übertragen sind, konfiguriert ist;
ein Übertragungsmodul, das konfiguriert ist, um die Bandbreitenressourcen zu verwenden, um die Daten, die zu übertragen sind, zu übertragen;
wobei das Abbildungsmodul weiter konfiguriert ist, um:
Datenverkehrsgrenze, Gewicht und Priorität für jeden Modus, der durch die multimodale Basisstation unterstützt wird zu konfigurieren, bevor die Daten, die zu übertragen sind, auf vorkonfigurierte Bandbreitenressourcen abgebildet werden, die dem Modus der Daten entsprechen, die zu übertragen sind;
wobei das Konfigurieren der Datenverkehrsgrenze, von Gewicht und Priorität für jeden Modus, der durch die multimodale Basisstation unterstützt wird, **gekennzeichnet ist durch**:
Unterteilen von Ressourcen, die **durch** die multimodale Basisstation zugeordnet werden können, in eine oder mehrere Bandbreitengruppen, wobei jede der Bandbreitengruppen einzeln Ressourcen von Bandbreiten teilt, die für jede der Banbreitengruppen zugeordnet sind;
Unterteilen der Ressourcen der Bandbreite in jeder der Bandbreitengruppen in eine Vielzahl von Bandbreitenressourcen, und Zuordnen jeder der Bandbreitenressourcen zu einem Modus, der jeweils **durch** die multimodale Basisstation unterstützt wird;
gemäß dem Modus, der jeder der Bandbreitenressourcen entspricht, Konfigurieren der Datenverkehrsgrenze, von Gewicht und Priorität für jede der Bandbreitenressourcen jeweils in ein und derselben Bandbreitengruppe.

## Revendications

1. Procédé de transmission de données de station de base multimode entre un côté réseau et la station de base multimode, comprenant les étapes suivantes :
la mise en correspondance, par une station de base multimode, de données à transmettre à des ressources de largeur de bande préconfigurées correspondant à un mode des données à transmettre, dans lequel une largeur de bande des ressources de largeur de bande n'est pas supérieure à une limite de trafic configurée pour le mode des données à transmettre (S102) ;
l'utilisation, par la station de base multimode, des ressources de largeur de bande pour transmettre les données à transmettre (S104) ;
avant que la station de base multimode mette en correspondance les données à transmettre aux ressources de largeur de bande préconfigurées correspondant au mode des données à transmettre, le procédé comprend en outre :
la configuration d'une limite de trafic, d'un poids et d'une priorité pour chaque mode pris en charge par la station de base multimode ;
dans lequel la configuration d'une limite de trafic, d'un poids et d'une priorité pour chaque mode pris en charge par la station de base multimode est **caractérisée par** :
la répartition de ressources qui peuvent être attribuées par la station de base multimode dans un ou plusieurs groupes de largeurs de bande, dans lequel chacun des groupes de largeurs de bande partage individuellement des ressources de largeur de bande attribuées à chacun des groupes de largeurs de bande ;
la répartition des ressources de la largeur de bande dans chacun des groupes de largeurs de bande dans une pluralité de ressources de largeur de bande, et l'attribution de chacune des ressources de largeur de bande respectivement à un mode pris en charge par la station de base multimode ;
selon le mode correspondant à chacune des ressources de largeur de bande, la configuration de la limite de trafic, du poids et de la priorité pour chacune des ressources de largeur de bande dans respectivement un et le même groupe de largeurs de bande.

2. Procédé selon la revendication 1, **caractérisé en ce que**, avant que la station de base multimode utilise les ressources de largeur de bande pour transmettre les données à transmettre, le procédé comprend en outre :
la station de base multimode détermine que des ressources de largeur de bande requises pour transmettre actuellement les données sont supérieures à des ressources de largeur de bande qui peuvent être utilisées par la station de base multimode ;
selon un poids et une priorité des données à transmettre, la station de base multimode ajuste les ressources de largeur de bande utilisées par les données à transmettre.

3. Procédé selon la revendication 1, **caractérisé en ce que** la station de base multimode mettant en correspondance les données à transmettre aux ressources de largeur de bande préconfigurées correspondant au mode des données à transmettre comprend :
la station de base multimode détermine qu'une adresse de protocole Internet, IP, ou un identifiant de réseau local virtuel, VLAN, dans les données à transmettre correspond aux ressources de largeur de bande préconfigurées ;
la station de base multimode met en correspondance les données à transmettre aux ressources de largeur de bande.

4. Procédé selon la revendication 1, **caractérisé en ce que** les ressources de largeur de bande dans chacun des groupes de largeurs de bande correspondent aux ressources qui peuvent être fournies par un ou plusieurs ports de réseau physiques de la station de base multimode.

5. Procédé selon la revendication 1, **caractérisé en ce que** le nombre des ressources de largeur de bande dans la pluralité de ressources de largeur de bande est déterminé selon une politique prédéfinie.

6. Procédé selon l'une quelconque des revendications 1 à 5, **caractérisé en ce que**, après la configuration de la limite de trafic, du poids et de la priorité pour chacune des ressources de largeur de bande dans respectivement un et le même groupe de largeurs de bande, le procédé comprend en outre :
la répartition d'une file d'attente d'envoi de message, dans chacune des ressources de largeur de bande, pour transmettre un flux de services dans une pluralité de files d'attente de largeur de bande, dans lequel chacune des files d'attente de largeur de bande est attribuée à un service correspondant à un mode pris en charge par la station de base multimode ;
selon un type de service du service correspondant à chacune des files d'attente de largeur de bande, la configuration de la limite de trafic, du poids et de la priorité pour chacune des files d'attente de largeur de bande dans respectivement une et la même ressource de largeur de bande.

7. Procédé selon la revendication 6, **caractérisé en ce que** la répartition de la file d'attente d'envoi de message pour transmettre le flux de services dans chacune des ressources de largeur de bande dans la pluralité de files d'attente de largeur de bande comprend :
selon une relation de mise en correspondance entre une valeur différenciée de point de code de service, DSCP, et un numéro de file d'attente, la répartition de la file d'attente d'envoi de message, pour transmettre le flux de services dans chacune des ressources de largeur de bande, dans la pluralité de files d'attente de largeur de bande.

8. Procédé selon la revendication 6, **caractérisé en ce que** le nombre de files d'attente de largeur de bande dans la pluralité de files d'attente de largeur de bande est déterminé selon une politique prédéfinie.

9. Dispositif de transmission de données de station de base multimode, comprenant :
un module de mise en correspondance configuré pour mettre en correspondance des données à transmettre à des ressources de largeur de bande préconfigurées correspondant à un mode des données à transmettre, dans lequel une largeur de bande des ressources de largeur de bande n'est pas supérieure à une limite de trafic configurée pour le mode des données à transmettre ;
un module de transmission configuré pour utiliser les ressources de largeur de bande pour transmettre les données à transmettre ;
le module de mise en correspondance est en outre configuré pour :
configurer une limite de trafic, un poids et une priorité pour chaque mode pris en charge par la station de base multimode avant la mise en correspondance des données à transmettre aux ressources de largeur de bande préconfigurées correspondant au mode des données à transmettre ;
dans lequel la configuration d'une limite de trafic, d'un poids et d'une priorité pour chaque mode pris en charge par la station de base multimode est **caractérisée par** :
la répartition de ressources qui peuvent être attribuées par la station de base multimode dans un ou plusieurs groupes de largeurs de bande, dans lequel chacun des groupes de largeurs de bande partage individuellement des ressources de largeur de bande attribuées à chacun des groupes de largeurs de bande ;
la répartition des ressources de la largeur de bande dans chacun des groupes de largeurs de bande dans une pluralité de ressources de largeur de bande, et l'attribution de chacune des ressources de largeur de bande respectivement à un mode pris en charge par la station de base multimode ;
selon le mode correspondant à chacune des ressources de largeur de bande, la configuration de la limite de trafic, du poids et de la priorité pour chacune des ressources de largeur de bande dans respectivement un et le même groupe de largeurs de bande.
